# EUROPEAN PATENT APPLICATION

(11) **EP 0 999 503 A2**
(43) Date of publication of application: **10.05.2000**
(21) Application number: 99121792.8
(22) Date of filing: 03.11.1999
(51) Int. Cl.: G06F 17/30

(54) **File management system**

(30) Priority: 06.11.1998 JP 31582198
(71) Applicant: NEC CORPORATION, Tokyo (JP)
(72) Inventor: Hashimoto, Tamae, 7-1, Shiba 5-chome, Minato-ku, Tokyo (JP)
(74) Representative: von Samson-Himmelstjerna, Friedrich R., Dipl.-Phys.

(57) **Abstract**

A file management system (10) using a shared memory (14) with plural files in common comprises a system control part (15) for controlling the file management system (10); and a memory control part (13) for controlling access requisitions to the shared memory (14) independently from the system control part (15). With this file management system (10), it is possible to improve a throughput and to simplify a system configuration.

## Description

### BACKGROUND OF THE INVENTION

### 1. Field of the Invention:

The present invention relates to a file management system and more particularly to a file management system in which plural files use a shared memory in common.

### 2. Description of the Related Art:

Conventionally, it is known that there is a file management system in which plural files use a shared memory in common. To give examples of such a file management system, there are a digital copy machine disclosed in Japanese Laid-Open Patent Application No. Hei10-74163 and a memory control system disclosed in Japanese Laid-Open Patent Application No. Hei5-73216.

Japanese Laid-Open Patent Application No. Hei10-74163 shows a technique of the digital copy machine performing plural functions, for example, of acting as a facsimile, a copy machine and a printer. This digital copy machine uses shared resources including a memory stored with data developed by each function and a memory controller controlling input/output to/from the memory.

Japanese Laid-Open Patent Application No. Hei5-73216 shows a technique of the memory controller provided with a memory having a chain information storage area stored with chain information and an empty track information storage area stored with empty track information, and a control part accessing to data based on the empty track information and the chain information for each track. One address of the empty track information storage area is stored with only track information so as to shorten a time to retrieve the empty track.

The chain information shows a track stored with the data following the data to be stored with the track as to all data tracks in its memory. The empty information shows whether a track is empty or not for all data tracks in its memory.

However, in the conventional digital copy machine and the conventional memory control system, each of the functions is provided with each CPU (Central Processing Unit), and another CPU in the system control part coordinates access requisitions from the respective functions and controls the memory. As a result, it is difficult to improve a throughput.

Further, the respective functions perform processings separately not so as to occupy the memory which is a shared resource, therefore, it is not possible to avoid a system configuration from becoming larger.

### SUMMARY OF THE INVENTION

In view of the above, it is an object of the present invention to provide a file management system which can improve a throughput and can simplify a system configuration by making effective use of a memory when a memory is shared by a plurality of files.

According to a first aspect of the present invention, there is provided a file management system using a shared memory with plural files in common, comprising:
a system control part for controlling the file management system; and a memory control part for controlling access requisitions to the shared memory independently from the system control part.

In the foregoing, a preferable mode is one wherein an access is allowed based on each priority set for each of the access requisitions when plural access are required.

Also, a preferable mode is one wherein an access to the shared memory is allowed in order of priority expect an previously allowed access.

Also, a preferable mode is one wherein an access to the shared memory is allowed by time-sharing.

Further, a preferable mode is one wherein the memory control means includes a coordinating part coordinating the access requisitions and a memory access part accessing the shared memory.

Further, a preferable mode is one wherein the memory control means is a memory controller controlling reading/ writing of the access requisitions from/to the shared memory based on a coordinated result.

Still further, a preferable mode is one wherein the memory controller receives the access requisitions via plural interfaces of which priorities are different.

Also, according to a second aspect of the present invention, there is provided a composite apparatus processing access requisitions by plural functions and provided with the file management system according to the first aspect of the present invention.

With this configuration, in the file management system using a shared memory with plural files in common, the memory control part controls controlling access requisitions to the shared memory independently from the system control part. As a result, when plural files use one memory in common, the memory is used effectively, whereby it is possible to improve a throughput and to simplify a system configuration.

### BRIEF DESCRIPTION OF THE DRAWINGS

The above and other objects, advantages and features of the present invention will be more apparent from the following description taken in conjunction with the accompanying drawings, in which:
Fig. 1 is a block diagram showing an approximate configuration of a file management system according to an embodiment of the present invention;
Fig. 2 is a block diagram showing a connection state between the interface part and the memory controller shown in Fig. 1;
Fig. 3 is a block diagram explaining a coordinating/control action of the memory controller for access requisitions;
Fig. 4 is a block diagram showing a file management system in a composite apparatus having plural functions; and
Fig. 5 is a block diagram showing input/output data to/from the external interface part.

### DETAILED DESCRIPTION OF THE PREFERRED EMBODIMENT

Best mode of carrying out the present invention will be described in further detail with reference to accompanying drawings.

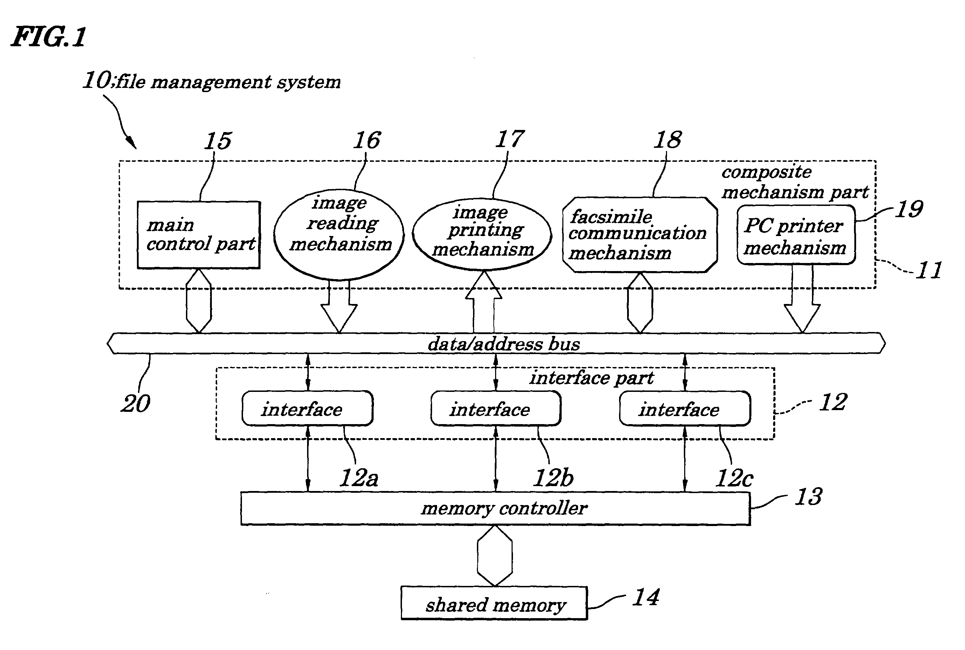

Figure 1 is a block diagram showing an approximate configuration of the file management system according to an embodiment of the present invention. As shown in Fig. 1, a file management system 10 is provided with a composite mechanism part 11, an interface part 12, a memory controller 13 and one shared memory 14.

The composite mechanism part 11 is provided with a plurality of mechanism parts including a main control part 15 which is a CPU, an image reading mechanism 16, a image printing mechanism 17, a facsimile communication mechanism 18, a PC printer mechanism 19 and soon. The image reading mechanism 16 reads images with a scanner. The image printing mechanism 17 prints images with a printer engine. The facsimile communication mechanism 18 executes communication by a facsimile. The PC printer mechanism 19 executes printing based on print information from a PC (personal computer).

The interface part 12 connected with the composite mechanism part 11 via a bus 20 is provided with a plurality of interfaces 12a, 12b, 12c. Though Fig. 1 shows three interfaces, the number of the interfaces is not limited to three and any number may be available.

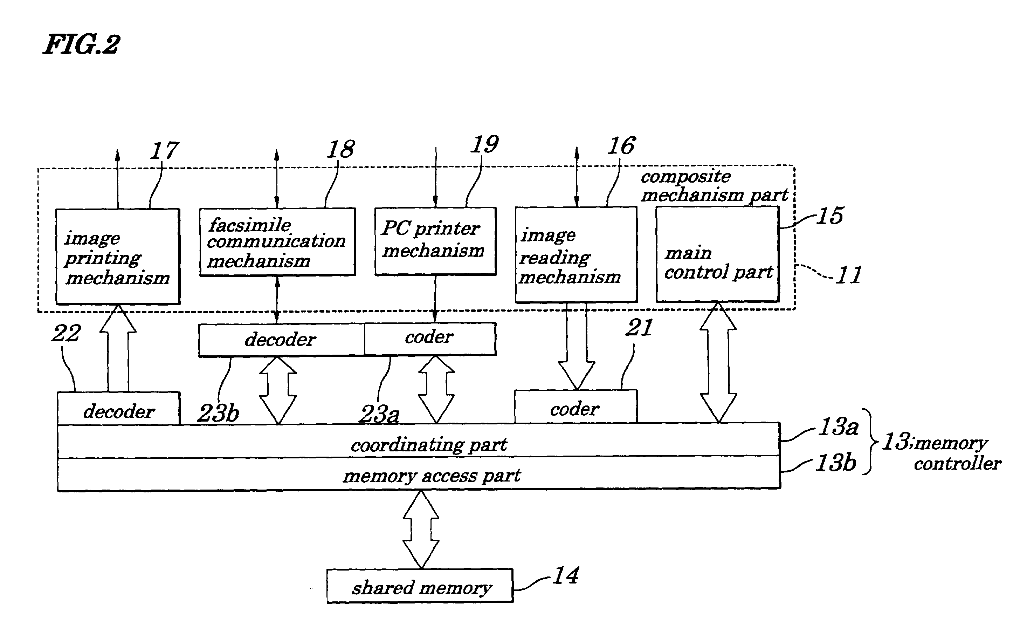

Figure 2 is a block diagram showing a connection state between the composite mechanism part 11 and the memory controller 13 shown in Fig. 1. As shown in Fig.2, the memory controller 13 is provided with a coordinating part 13a coordinating access requisitions and a memory access part 13b accessing to the shared memory 14. The memory controller 13 coordinates access requisitions from the interface part 12 to the shared memory 14 and controls reading/writing from/to the shared memory.

The access requisitions from the respective interfaces 12a, 12b, 12c, as shown in Figs. 1 and 2, are outputted into the access requisition coordinating part 13a of the memory controller 13. Various kinds of data which are actually accessed are transmitted via a data/address bus connected to the memory access part 13b.

There are some access requisitions to the shared memory 14, for example, reading/writing control data from/to the main control part 15, writing image data read through the scanner of the image reading mechanism and binarized, reading-out print data to the printer engine of the image printing mechanism 17, reading/writing data to be sent/received to/from the facsimile of the facsimile communication mechanism 18, and writing print data required from PC with PC printer mechanism 19.

As to these various kinds of data, the main control part 15 reads/writes data directly, however, the image reading mechanism 16 writes data via a coder 21 and the image printing mechanism 17 reads data via a decoder 22. The facsimile communication mechanism 18 writes/reads data via a coder 23a and the PC printer mechanism 19 writes data via a decoder 23b.

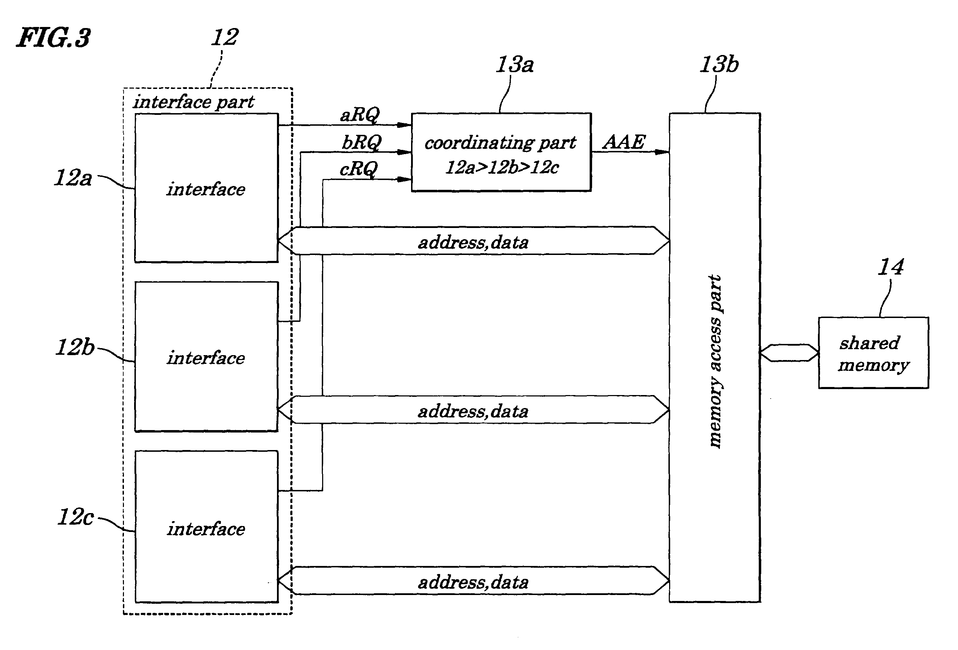

Figure 3 is a block diagram explaining coordinating/control action of the memory controller for access requisitions. As shown in Fig. 3, access requisitions are outputted from the interface part 12 to the shared memory 14 via three interfaces 12a, 12b, 12c.

The coordinating part 13a selects these interfaces based on the order of priority. The order of priority is set as a first priority is given to the interface 12a, a second priority is given to the interface 12b and a third priority is given to the interface 12c.

When there are plural access requisitions in a case in which the coordinating part 13a latches an access requisition from the interface, the coordinating part 13a allows an access to the interface having the first priority and outputs to the memory access part 13b with a notification (AAE) indicating that only the allowed interface can be accessed.

The memory access part 13b which receives the notification (AAE) accesses the shared memory 14 based on the address and the data of the access-allowed interface notified from the coordinating part 13a. The memory access part 13b, before finishing access, notifies to the coordinating part 13a and the respective interfaces 12a,12b,12c that the access requisition is allowed, and makes the access requisition void.

In the next access requisition coordinating, an access is allowed for an access requisition from the interface which have a priority and is not accessed previously. That is, when the access from the interface 12a is allowed, an access from the interface 12b having a priority following to the interface 12a is allowed.

In this way, when there are plural access requisitions, successive accesses from one interface are not allowed, whereby there is no case in which a possibility of access to an interface having the following priority decreases.

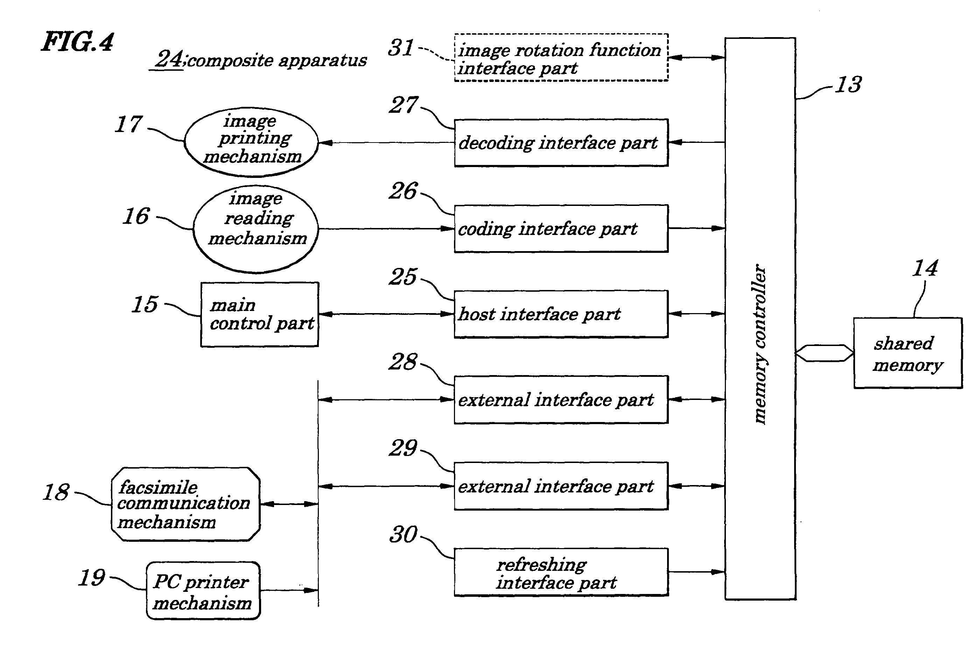

Figure 4 is a block diagram showing a file management system in a composite apparatus having plural functions. As shown in Fig. 4, a composite apparatus 24 is provided with the main control part 15, the image reading mechanism 16, the image printing mechanism 17, the facsimile communication mechanism 18, the PC printer mechanism 19, the memory controller 13 and the shared memory 14.

With this arrangement, the composite apparatus 24 has plural functions including a copy function, a facsimile function and a PC printer function in addition to a scanner function. The plural functions use one shared memory 14 in common.

Further, the composite apparatus 24 is provided with a host interface part 25, a coding interface part 26, a decoding interface part 27, two external interface parts 28,29, a refreshing interface part 30 and an image rotation function interface part 31.

The host interface part 25 is used when the main control part 15 directly accesses the shared memory 14. The coding interface part 26 is used when image data, which is read via the scanner and binarized to carry out the copying and the facsimile transmission, is coded-compressed and written into the shared memory 14 via the memory controller 13. The decoding interface 27 is used, when the coded-compressed data written in the shared memory 14 is read and expanded and data to be printed is outputted to the image printing mechanism 17.

The external interface parts 28,29 are used when the composite apparatus processes data to be sent/received by a facsimile and print data inputted from a personal computer via a Centronics interface or the like. The refreshing interface part 30 is used when a volatile memory such as a DRAM (Dynamic Random Access Memory) is refreshed. The image rotation function interface part 31 is used when the inputted image data is processed/edited so as to be rotationally printed.

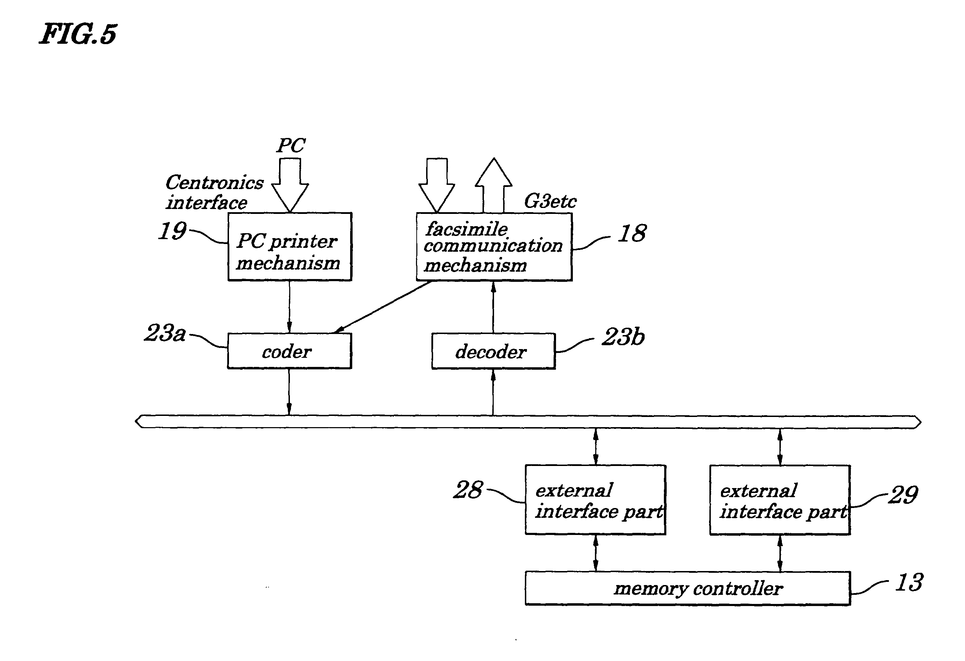

Figure 5 is a block diagram showing input/output data to/from the external interface part. As shown in Fig. 5, the external interface parts 28, 29 having 2-channnels are connected to a coder 23a and a decoder 23b via a bus. The coder 23a is connected to the facsimile communication mechanism 18 and to the PC printer mechanism 19. The decoder 23b is connected to the facsimile communication mechanism 18.

An explanation will be given of the file management by the above-mentioned composite apparatus 24 with reference to Figs. 4 and 5.

For example, when print data is sent from a personal computer via a Centronics interface or the like, the print data is emulated and is bit-mapped in a buffer (not shown), and then is compressed by the coder 23a and stored in the shared memory 14 via the external interface parts 28, 29.

Similarly, facsimile receiving data is developed into a buffer from MH (Modified Huffman) codes or MR (Modified READ) codes by the facsimile communication mechanism 18 , and then is compressed by the corder 23a and stored in the shared memory 14 via the external interface parts 28,29.

Facsimile sending data, which is compressed data read by the scanner, is stored in the shared memory 14. The facsimile sending data is read and expanded by the decoder 23b, is coded for communication by a modem of the facsimile communication mechanism 18, and then is sent. As the facsimile communication mechanism 18, for example, a G3 facsimile is used.

When the main control part 15 directly accesses the shared memory 14 via the host interface, it is expected that the memory is accessed continuously. Therefore, when the image rotation function interface 31, of which the share of the memory access resource is particularly large, requires an access, the host interface part 25 controls the access requisition throughput from the main control part 15 so as to be small and outputs the access requisitions to the coordinating part 13a. To make the access requisition throughput small, a timer delays access requisitions.

This timer control will be explained. First, when the access requisition from the image rotation function interface 31 is not allowed for a time t1 and more or when the access requisitions from the external interfaces 28,29 having lower priority are not allowed for a time t2 and more, the time t1 or the time t2 is made clear, and the access requisition from the host interface part 25 is outputted after delaying for a time T.

In this case, when a time t3 and/or more is passed after the access requisition from the host interface part 25 is delayed, the time T is made clear and the access requisition from the host interface part 25 is usually outputted without delay. This action is carried out so as not to lower the throughput of the host interface 25 unnecessarily.

With the timer control of the host interface part 25, it is possible to increase opportunities that the access requisitions from the external interface parts 28, 29 having priorities lower than the image rotation function interface 31 are allowed.

In this embodiment, the order of priority in the coordinating part 13a is set as follows. The coding interface part 26 is first, the host interface part 25 is second, the decoding interface part 27 is third, the image rotation function interface part 31 is fourth, the external interface part 28 is fifth and the external interface part 29 is sixth. With the composite apparatus 24 in which the order of priority is set in this way, it is possible to improve the throughput of the copy function.

This order of priority is an example, and various combinations may be available. In accordance with another order of priority, it is possible to improve a throughput of any function among plural functions including the scanner function, the copy function, the facsimile function, the PC printer and the like.

As above described, the memory controller 13 decides the order of priority for plural access requisitions, and coordinates to sequentially allow accesses to the shared memory 14 in the order of priority. In the order allowed by this coordinating, the shared memory 14 is accessed by time-sharing.

Therefore, plural access requisitions generating at any timing are allowed in the set order of priority, instead of the order of arrival. As a result, an access requisition which generates earlier does not always take priority over another access requisition which generates later, and when priority is given to an access requisition which generates later, the access requisition is allowed earlier.

Further, a coordinating control of the access allowance and an access to the shared memory 14 are independently executed by the memory controller 13 not by the main control part 15 in the file management system 10. Data to be written in the shared memory 14 is compressed by the coder and data read from the shared memory 14 is expanded by the decoder.

As a result, it is possible to improve any function throughput among plural functions in accordance with the set order of priority, therefore, it is possible to carry out higher speed processing than that by the main control 15.

Further, the shared memory 14 can be used effectively by reducing data quantity to be stored, therefore, it is possible to prevent the shared memory 14 and the composite apparatus from becoming large.

As above described, according to the present invention, in a file management system using a shared memory with plural files in common, an access requisition to the shared memory is controlled by a memory control part independently from a control part of the system, therefore, though plural files use one memory in common, it is possible to improve a throughput and to simplify a system configuration by effective use of a memory.

It is thus apparent that the present invention is not limited to the above embodiments but may be changed and modified without departing from the scope and spirit of the invention.

Finally, the present application claims the priority based on Japanese Patent Application No. Hei10-315821 filed on November 6,1998, which is herein incorporated by reference.

## Claims

1. A file management system (10) using a shared memory (14) with plural files in common; characterized by comprising:
system control means (15) for controlling said file management system (10); and
memory control means (13) for controlling access requisitions to said shared memory (14) independently from said system control means (15).

2. The file management system (10) according to claim 1, characterized in that an access is allowed based on each priority set for each of said access requisitions when plural access are required.

3. The file management system (10) according to claim 2, characterized in that the access to said shared memory (14) is allowed in order of priority except an previously allowed access.

4. The file management system (10) according to claim 2, characterized in that the access to said shared memory (14) is allowed by time-sharing.

5. The file management system (10) according to any one of claims 1 through 4, characterized in that said memory control means (13) includes a coordinating part (13a) coordinating said access requisitions and a memory access part (13b)accessing said shared memory (14).

6. The file management system (10) according to claim 5, characterized in that said memory control means (13) is a memory controller (13) controlling reading/writing of said access requisitions from/to said shared memory (14) based on a coordinated result.

7. The file management system (10) according to claim 6, characterized in that said memory controller (13) receives said access requisitions via plural interfaces (12a, 12b, 12c) of which priorities are different.

8. A composite apparatus processing access requisitions by plural functions and provided with said file management system (10) according to one any of claims 1 through 7.
